# EUROPÄISCHE PATENTSCHRIFT

(11) **EP 2 028 072 B1**
(45) Veröffentlichungstag und Bekanntmachung des Hinweises auf die Patenterteilung: **12.08.2015**
(21) Anmeldenummer: 08011477.0
(22) Anmeldetag: 25.06.2008
(51) Int. Cl.: B60W 30/06, B60W 30/12, B62D 15/02, B60W 10/20

(54) **Kraftfahrzeug mit einem Spurwechsel- oder einem Spurhalteassistenzsystem sowie einem Einparkhilfesystem**
Motor vehicle with an assistance system for changing lane or for keeping lane and parking assistance
Véhicule automobile doté d'un système d'assistance au changement de voie ou de suivi de voie ainsi que d'un système d'aide au stationnement

(30) Priorität: 21.08.2007 DE 102007039374
(43) Veröffentlichungstag der Anmeldung: 25.02.2009
(73) Patentinhaber: AUDI AG, 85045 Ingolstadt (DE)
(72) Erfinder: Limbacher, Reimund, 85055 Ingolstadt (DE); Schuberth, Stefan, 85049 Ingolstadt (DE)
(74) Vertreter: Thielmann, Frank

(56) Entgegenhaltungen:
- DE-A1- 10 354 290
- DE-A1- 19 845 568
- DE-A1-102005 005 720
- DE-A1-102006 002 662
- US-A1- 2005 017 857

## Beschreibung

Die Erfindung betrifft ein Kraftfahrzeug mit einem Spurwechsel- oder einem Spurhalteassistenzsystem umfassend den Bereich vor und/oder hinter dem Fahrzeug erfassende Überwachungsmittel, sowie einem Einparkhilfesystem umfassend mehrere front- und/oder heckseitig vorgesehene Ultraschallsensoren zur Umfelderfassung.

Ein gattungsgemäßes Kraftfahrzeug ist zum Beispiel aus dem Dokument DE 103 54 290 A1 bekannt.

Moderne Kraftfahrzeuge werden zunehmend mit Fahrerassistenzsystemen ausgerüstet. Ein solches ist beispielsweise ein Spurwechselassistenzsystem, das über heckseitig angeordnete Sensoren, beispielsweise Radarsensoren, den Fahrzeugrückraum und den Seitenbereich erfasst, um anhand der Sensorsignale Informationen über sich von hinten nähernde Fahrzeuge zu ermitteln, die im Falle eines Spurwechsel des eigenen Fahrzeugs hierfür gegebenenfalls zu nahe sind, und es zu einer Gefährdungssituation kommen würde. Der Fahrer kann bei Erfassen eines zu nahen Fahrzeugs gewarnt werden, so dass er einen beabsichtigten Spurwechsel unterbrechen kann. Ein anderer Typ eines Assistenzsystems ist ein Spurhalteassistenzsystem, häufig auch "Lane-Departure-Warning"-System genannt. Dieses umfasst als Überwachungsmittel üblicherweise eine häufig im Bereich der Windschutzscheibe angeordnete Kamera, mit der das Fahrzeugvorfeld aufgenommen wird. Über geeignete Bildverarbeitungsmittel wird der Bildinhalt dahingehend analysiert, wo die Fahrspurbegrenzungen sind, und wie die relative Position des eigenen Fahrzeugs zu den Fahrspurbegrenzungen ist. Daraus kann ermittelt werden, ob und wann das eigene Fahrzeug die eigene Spur verlässt, so dass der Fahrer hierüber rechtzeitig in Kenntnis gesetzt beziehungsweise gewarnt werden kann.

Ein weiteres Assistenzsystem ist ein Einparkhilfesystem, das üblicherweise mehrere front- und/oder heckseitig vorgesehene Ultraschallsensoren zur Umfelderfassung aufweist. Ein solches Einparkhilfesystem kann ein passives System sein, bei dem über die Ultraschallsensoren beziehungsweise deren Signalverarbeitung etwaige im Einparkweg befindliche Hindernisse ermittelt werden, wobei das Ermittlungsergebnis dem Fahrer akustisch oder optisch angezeigt wird, so dass er den Einparkvorgang entsprechend vornehmen kann. Der Fahrer agiert hier also selber. Unter einem Einparkhilfesystem ist auch in der vorliegenden Erfindung ein aktives System in Form eines das Fahrzeug selbst führenden Systems zu verstehen. Bei diesen Einparkhilfesystem wird über einen geeigneten, zur Seite abstrahlenden Ultraschallsensor eine etwaige Parklücke erfasst und anhand der Signale die Parklücke in ihrer Größe vermessen, wobei das Fahrzeug eine geeignete Einparktrajektorie ausgehend vom Fahrzeugstandort ermittelt, und das Fahrzeug selbsttätig unter aktivem Lenkeingriff und unter aktiver Steuerung des Antriebsaggregats und der Bremseinrichtung ohne jede Fahreraktion in die Parklücke fährt. Während das Einparkhilfesystem üblicherweise nur bei sehr geringen Fahrzeuggeschwindigkeiten, beispielsweise bis maximal 25 km/h oder 30 km/h aktiv ist, werden die anderen genannten Assistenzsysteme, also das Spurwechsel- oder Spurhalteassistenzsystem, erst bei höheren Fahrzeuggeschwindigkeiten wie beispielsweise 50 km/h oder 60 km/h aktiviert, gegebenenfalls nach einer vorherigen grundlegenden Zuschaltung des Assistenzsystems.

Der Erfassungsbereich der Überwachungsmittel eines Spurwechsel- beziehungsweise Spurhalteassistenzsystems ist zur Seite hin begrenzt. Der Strahlenfächer, den die Radarsensoren des Spurwechselassistenzsystems am Fahrzeugheck abstrahlen, erstreckt sich beispielsweise über einen Winkel von 90°, auch der Bildbereich, den die Überwachungskamera des Spurhalteassistenzsystems nach vorne erfasst, ist im wesentlichen fächerförmig mit einem Öffnungswinkel von beispielsweise ebenfalls 90°. Eine Erfassung von Informationen aus dem Bereich seitlich des Fahrzeugs ist mit diesen Überwachungsmitteln nicht möglich. Für das Spurwechselassistenzsystem bedeutet dies, dass ein Fahrzeug, das zunächst im Fächerwinkel war und erfasst wurde, diesen bei hinreichender Annäherung an das eigene Fahrzeug wieder verlässt und in den Totwinkelbereich eintritt, in dem es also über die Sensorik nicht erfasst wird. Um dennoch eine Information über die Position des überholenden Fahrzeugs im Totwinkelbereich zu haben, wird die Position rechnerisch ermittelt, wozu die vorab während der Sensorerfassung ermittelten Messparameter und daraus ermittelte Rechenwert hinsichtlich Relativgeschwindigkeit etc. berücksichtigt werden. Eine tatsächliche Erfassung jedoch ist bis in den Bereich, in dem das überholende Fahrzeug vom Fahrer selbst an der Seite gesehen werden kann, nicht möglich.

Im Falle eines Spurhalteassistenzsystems werden Objekte, die sich seitlich neben dem eigenen Fahrzeug befinden, wie beispielsweise eine Leitplanke oder ein anderes Fahrzeug in diesem Zeitpunkt ebenfalls nicht erfasst, nachdem diese Objekte nicht im aufgenommenen Überwachungsbild gezeigt sind. Es kann die Situation eintreten, dass das eigene Fahrzeug einem solchen Objekt zu nah ist, eine Warnung oder ein Eingriff kann jedoch nicht erfolgen, da das Objekt in diesem Totwinkelbereich ebenfalls nicht erfasst wird. Der Erfindung liegt damit das Problem zugrunde, ein Kraftfahrzeug anzugeben, das auch eine Erfassung von Objekten im Bereich außerhalb der Erfassungsbereiche der assistenzsystemseitigen Überwachungsmittel ermöglicht.

Das Problem wird durch die Merkmale des unabhängigen Anspruchs 1 gelöst.

Zur Lösung dieses Problems ist bei einem Kraftfahrzeug der eingangs genannten Art erfindungsgemäß vorgesehen, dass das Einparkhilfesystem während der Fahrt unter gleichzeitigem Umschalten auf einen Betrieb wenigstens eines Ultraschallsensors mit einem vergrößerten Erfassungsbereich aktivierbar und die von dessen wenigstens einem Ultraschallsensor gelieferten Informationen seitens des Spurwechsel- oder Spurhalteassistenzsystems verarbeitbar sind.

Beim erfindungsgemäßen Kraftfahrzeug werden die Erfassungsinformationen des Überwachungsmittels des Assistenzsystems und die Informationen, die der oder die Ultraschallsensoren des Einparkhilfesystems liefern, kombiniert. Dies ermöglicht es, de facto den Erfassungsbereich des Assistenzsystems zur Seite hin deutlich zu erweitern, nachdem in diesem Bereich der oder die Ultraschallsensoren des Einparkhilfesystems aktiv sind. Zu diesem Zweck ist - anders als bei bekannten Kraftfahrzeugen - das Einparkhilfesystem während der Fahrt aktiv, das heißt, die Sensorüberwachung ist zu einem Zeitpunkt möglich, zu dem das Einparkhilfesystem mit seiner Grundfunktionalität gerade nicht arbeiten würde.

Ein weiteres zentrales Merkmal des erfindungsgemäßen Kraftfahrzeugs ist, dass bei Betrieb des Einparkhilfesystems während der Fahrt der Erfassungsbereich des oder der dabei aktiven Ultraschallsensoren vergrößert wird. Das heißt, es erfolgt eine Umschaltung des Sensorbetriebs beziehungsweise der Sensoransteuerung von einem "Low-Range"-Betrieb, wie er im Rahmen der originären Einparkhilfesystemfunktionalität ausreichend ist, auf einem "Long-Range"-Erfassungsbetrieb, bei dem der Ultraschallfächer oder die Ultraschallkeule breiter und insbesondere deutlich länger ist. Während der Erfassungsbereich der Ultraschallsensoren im Einparkhilfebetrieb üblicherweise auf geringe Entfernungen, beispielsweise 0,5 - 1 m seitlich, 1 - 1,5 m nach vorne und 1,5 - 2 m nach hinten begrenzt ist, ist eine Erfassung im erweiterten Modus bis zu Reichweiten von beispielsweise 4 - 6 m möglich, auch die Breite des Ultraschallfächers oder der Ultraschallkeule kann vergrößert werden. Dies ermöglicht es folglich, auch Objekte zu erfassen, die relativ weit seitlich vom Fahrzeug beabstandet sind.

Insgesamt bietet somit das erfindungsgemäße Kraftfahrzeug die Möglichkeit, den Erfassungsbereich des Spurwechsel- oder Spurhalteassistenzsystems deutlich zu vergrößern, indem die Funktionalität des Einparkhilfesystems in die Objekterfassung eingebunden wird. Dies führt vorteilhaft dazu, dass der Totwinkelbereich deutlich verkürzt werden kann, im Idealfall ist es sogar denkbar, diesen näherungsweise vollständig zu beseitigen, mithin also beispielsweise ein überholendes Kraftfahrzeug so lange sensorisch über die Assistenzsystemsensoren und dann folgend über die Ultraschallsensoren zu erfassen, bis das Fahrzeug in das Blickfeld des Fahrers eintritt. Auch bezüglich des Spurhalteassistenzsystems bietet sich ein beachtlicher Vorteil, als seitliche Objekte, die von der Überwachungskamera nicht mehr aufgenommen werden, gleichwohl aber etwas zu nah zum eigenen Fahrzeug sind, erfasst werden können, beispielsweise eine Leitplanke, woraufhin der Fahrer früher gewarnt werden kann. Auch sich von hinten nähernde und das eigene Fahrzeug überholende Fahrzeuge, die beachtlich nahe dem eigenen Kraftfahrzeug kommen, können deutlich früher erfasst werden, als dies über die Aufnahmekamera möglich wäre, so dass auch in diesem Fall eine deutlich frühere Warnung oder gegebenenfalls ein aktiver Eingriff in die Lenkung möglich ist.

Die Erfindung sieht vor, dass das Einparkhilfesystem mit der Aktivierung des Spurwechsel- oder Spurhaltesystems automatisch aktiviert ist.

Das heißt, dass die Aktivierung des Einparkhilfesystems automatisch dann erfolgt, wenn auch das Spurwechsel- oder Spurhalteassistenzsystem aktiviert wird. Üblicherweise werden diese erst bei höheren Geschwindigkeiten wie beispielsweise 50 km/h oder 60 km/h automatisch zugeschaltet. Dies würde dann auch für das Einparkhilfeassistenzsystem gelten.

Die Grenzgeschwindigkeit sollte wenigstens der maximalen Geschwindigkeit entsprechen, bis zu welcher das Einparkhilfesystem in seiner originären Funktion betreibbar ist. Wie beschrieben ist das Einparkhilfesystem, sei es, dass es sich um ein passives System handelt, das nur etwaige Hindernisse erfasst und der Fahrer gewarnt wird, sei es, dass es ein aktives Einparkhilfesystem ist, das aktiv den Einparkvorgang ohne jedwede Fahreraktion vornimmt, nur innerhalb eines bestimmten Geschwindigkeitsbereich von 0 km/h bis z.B. 30 km/h grundsätzlich funktionsbereit, bei höheren Geschwindigkeiten wird es automatisch deaktiviert. Die automatische Aktivierung des Einparkhilfesystems im erfindungsgemäßen Modus mit vergrößertem Erfassungsbereich sollte, damit es zu keiner widersprechenden Nutzung der Ultraschallsensoren kommt, erst dann möglich sein, wenn das Einparkhilfesystem in seiner originären Funktion nicht betreibbar ist. Deshalb sollte also die Grenzgeschwindigkeit mindestens gleich oder größer der maximalen Geschwindigkeit sein, bis zu der das Einparkhilfesystem üblicherweise aktiv ist. Die Grenzgeschwindigkeit kann beispielsweise einen Wert zwischen 30 km/h und 60 km/h aufweisen.

Besonders zweckmäßig ist es, wenn das Einparkhilfesystem ein aktives System ist, das das Fahrzeug automatisch ohne Fahreraktivität zum Einparken bewegt, und das vorzugsweise beidseits am Fahrzeug angeordnete Ultraschallsensoren aufweist, deren Erfassungsbereich sich zur Seite des Fahrzeugs, vorzugsweise mit einer im Wesentlichen senkrecht zur Fahrzeuglängsachse stehenden Hauptschallrichtung, erstreckt. Bei derartigen aktiven Systemen ist wie beschrieben zu den üblicherweise front- und/oder heckseitig vorgesehenen Ultraschallsensoren an beiden Fahrzeugseiten wenigstens ein weiterer Ultraschallsensor vorgesehen, der im Wesentlichen rechtwinklig zur Fahrzeuglängsachse abstrahlt. Dieser Sensor dient dazu, eine mögliche Parklücke in ihrer Größe und Geometrie ausmessen zu können. Nachdem der Ultraschallfächer oder die Ultraschallkeule dieses Sensors direkt zur Seite gerichtet ist, bietet sich die Integration dieses Sensors beziehungsweise die Nutzung seiner Signalinformationen besonders an, vom jeweiligen Fahrerassistenzsystem verwendet zu werden.

Wie beschrieben wird von einem Spurwechselassistenzsystem stets die Position des sich nähernden Fahrzeugs bestimmt, so lange es im Erfassungsbereich der Systemsensoren ist. Verlässt das überholende Fahrzeug den Erfassungsbereich, so wird rechnerisch ermittelt, wo es sich im Totwinkelbereich befindet. Eine zweckmäßigen Weiterbildung der Erfindung sieht nun vor, dass das von einem Spurwechselassistenzsystem ermittelte und die Position des erfassten Fahrzeugs außerhalb des Erfassungsbereichs der systemeigenen Überwachungsmittel beschreibende Ermittlungsergebnis anhand der von dem oder den Ultraschallsensoren gelieferten Informationen verifizierbar ist. Verlässt also das erfasste Fahrzeug den Erfassungsbereich des systemeigenen Überwachungsmittels, so wird, sollte der Ultraschallsensorerfassungsbereich nicht überlappen oder unmittelbar anschließen, die Fahrzeugposition nach wie vor rechnerisch prädiziert. Unter Berücksichtigung der ermittelten Geschwindigkeit des erfassten Fahrzeugs und der eigenen Fahrzeuggeschwindigkeit müsste das Fahrzeug zu einem bestimmten Zeitpunkt im Erfassungsbereich des oder der Ultraschallsensoren sein. Tritt dies ein, so kann das Ermittlungsergebnis des Spurwechselassistenzsystems hierüber verifiziert werden, das erfasste Fahrzeug wird quasi vom einen Erfassungsbereich in den anderen Erfassungsbereich übergeben. Andernfalls ist davon auszugehen, dass das überholende Fahrzeug im Totwinkelbereich seine Geschwindigkeit reduziert hat, mithin also im Totwinkelbereich parallel zum eigenen Fahrzeug fährt, woraus resultierend dem Fahrer eine zusätzliche Warnung gegeben werden kann.

Weitere Vorteile, Merkmale und Einzelheiten der Erfindung ergeben sich aus den im Folgenden beschriebenen Ausführungsbeispielen sowie anhand der Zeichnung. Dabei zeigen:
- Fig. 1: eine Prinzipdarstellung eines erfindungsgemäßen Kraftfahrzeugs einer ersten Ausführungsform, und
- Fig. 2: eine Prinzipdarstellung eines erfindungsgemäßen Kraftfahrzeugs einer zweiten Ausführungsform.

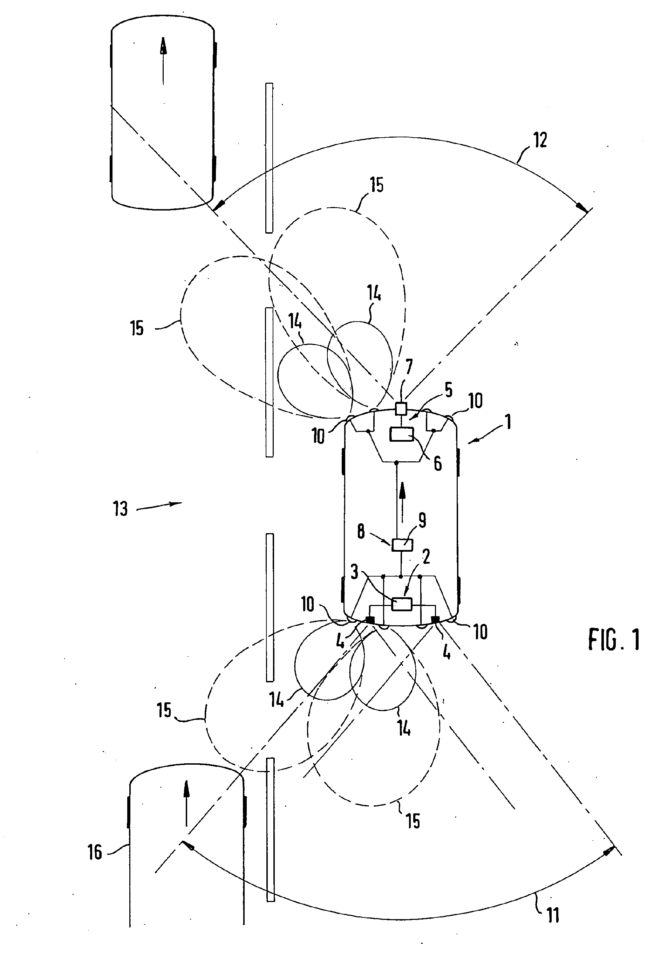

Fig. 1 zeigt ein erfindungsgemäßes Kraftfahrzeug 1, umfassend das Fahrerassistenzsystem in Form eines Spurwechselassistenzsystems 2 mit einer Systemsteuerung 3 und zwei zugeordneten Radarsensoren 4, sowie ein Spurhaltesystem 5 umfassend ein systemseitiges Steuergerät 6 sowie ein Überwachungsmittel in Form einer Kamera 7, die das Fahrzeugvorfeld erfasst. Ein Fahrzeug muss aber nicht beide Systeme aufweisen, es kann auch nur eines davon vorgesehen sein. Weiterhin ist ein passives Einparkhilfesystem 8 vorgesehen, umfassend ein Steuergerät 9 sowie front- und heckseitig vorgesehene Ultraschallsensoren 10, wobei im gezeigten Beispiel front- und heckseitig jeweils vier Ultraschallsensoren vorgesehen sind.

Die Radarsensoren 4 strahlen einen Strahlenfächer 11 ab, der sich nach hinten öffnet und einen begrenzten Winkelbereich erfasst. Entsprechendes gilt für den Bildöffnungswinkel 12, den die Kamera 7 aufnehmen kann. Ersichtlich ergibt sich im gezeigten Beispiel an der linken und rechten Fahrzeugseite des Kraftfahrzeugs 1 jeweils ein Bereich 13, in dem weder die Sensorik des Spurwechselassistenzsystems 2 noch die des Spurhaltesystems 6 irgend ein Objekt erfassen kann.

Auch die Ultraschallsensoren 10 strahlen jeweils einen Ultraschallfächer oder eine Ultraschallkeule 14 ab, die insbesondere in ihrer Längsausdehnung relativ kurz bemessen ist, nachdem eine relativ kurze Erfassungsstrecke ausreichend ist, um die Funktion des Einparkhilfesystems, die ihr originär zukommt, zu erfüllen. Während der Fahrt ist das Einparkhilfesystem in dieser Funktion nicht aktiv, vielmehr arbeitet es als Einparkhilfesystem mit seiner zugeordneten Funktion nur unterhalb einer bestimmten Grenzgeschwindigkeit, beispielsweise im Geschwindigkeitsbereich von 0 - 30 km/h, also einem Geschwindigkeitsbereich, in dem üblicherweise ein Einparkvorgang erfolgt.

Erfindungsgemäß ist es nun jedoch möglich, das Einparkhilfesystem 8 auch dann zu betreiben, wenn das Fahrzeug schneller fährt, um über die Informationen, die über ein oder mehrere der Ultraschallsensoren 10 erfasst werden, die Fahrerassistenzsysteme 2 und/oder 6 unterstützen zu können.

Im gezeigten Beispiel sei angenommen, dass zum einen das Fahrzeug 1 eine bestimmte Grenzgeschwindigkeit, beispielsweise 30 oder 40 km/h, überschritten hat. Ferner sei angenommen, dass beide Assistenzsysteme, also das Spurwechselassistenzsystem 2 und das Spurhalteassistenzsystem 6, aktiviert sind. Mit Überschreiten der Grenzgeschwindigkeit oder aber der Aktivierung der Assistenzsysteme 2, 6, was ebenfalls ab einer bestimmten Grenzgeschwindigkeit erfolgen kann, wird auch das Einparkhilfesystem 8 automatisch aktiviert, jedoch in einem anderen Betriebsmodus als ihm ursprünglich zukommt. Im gezeigten Beispiel wird zumindest ein Teil der Ultraschallsensoren wie in Fig. 1 dargestellt die beiden zur linken Fahrzeugseite hin angeordneten Sensoren 10 (gegebenenfalls auch alle Sensoren 10) betrieben, wobei auf einen anderen Sensormodus umgeschaltet wird, bei dem der Erfassungsbereich deutlich größer ist, wie durch die gestrichelten Ultraschallfächer oder Ultraschallkeulen 15 dargestellt ist. Die Erfassungsreichweite wird also in diesem anderen Betriebsmodus des Einparkhilfesystems beziehungsweise der zugeschalteten Ultraschallsensoren 10 deutlich vergrößert, die Länge eines solchen Ultraschallkegels beträgt beispielsweise 4 - 6 m oder mehr. Ersichtlich ist es hierdurch möglich, ein Kraftfahrzeug, beispielsweise das Fahrzeug 16, das - hier sei eine Autobahnfahrt angenommen - in der gleichen Richtung fährt wie das eigene Kraftfahrzeug 1 (siehe die Pfeile in den jeweiligen Kraftfahrzeugen, die die Fahrtrichtung angeben), und das schneller als das eigene Fahrzeug 1 ist, auch dann zu erfassen, wenn es aus dem Erfassungsfächer 11 des Spurwechselassistenzsystems 2 beziehungsweise seiner Radarsensoren 4 herausfährt. Das Kraftfahrzeug 16 ist in der in Fig. 1 gezeigten Situation noch zum Teil innerhalb des Erfassungsbereichs 11. Wenn es - angenommen, dass die Ultraschallsensoren 10 nicht betrieben werden - weiterfahren würde, würde es in Kürze den Erfassungsbereich verlassen und wäre im Totwinkelbereich 13, würde also nicht mehr aktiv erfasst. Der Totwinkelbereich 13 kann nun aber über die geänderte, weiterreichende Erfassung über die Ultraschallsensoren 10 deutlich verkürzt werden, wie durch die gestrichelt gezeichneten Erfassungsbereiche 15 dargestellt ist. Das Fahrzeug 16 dringt also bei Weiterfahrt in den Erfassungsbereich 15 des heckseitigen Ultraschallsensors 10 ein, wird also quasi vom Erfassungsbereich 11 in den Erfassungsbereich 15 übergeben. Wenn es diesen verlässt, befindet es sich im gezeigten Beispiel für eine sehr kurze Zeit in einem Totwinkelbereich, der jedoch wesentlich kleiner ist als der originäre Totwinkelbereich 13, bevor es in den Erfassungsbereich 15 des linken frontseitigen Ultraschallsensors 10 eintritt. Dort wird es umgehend wieder erfasst. Das heißt, die Zeitlücke, innerhalb welcher das Fahrzeug 16 nicht erfasst wird, ist im Vergleich zu bekannten Systemen in Folge der Integration und der Reichweitenumschaltung der betriebenen Ultraschallsensoren 10 des Einparkhilfesystems 8 deutlich verkleinert. Je nach dem, wie der Erfassungsbereich 15 der jeweiligen Ultraschallsensoren zugeschnitten ist oder werden kann, kann eine noch weitere Verkleinerung des endgültig resultierenden Totwinkelbereichs erreicht werden.

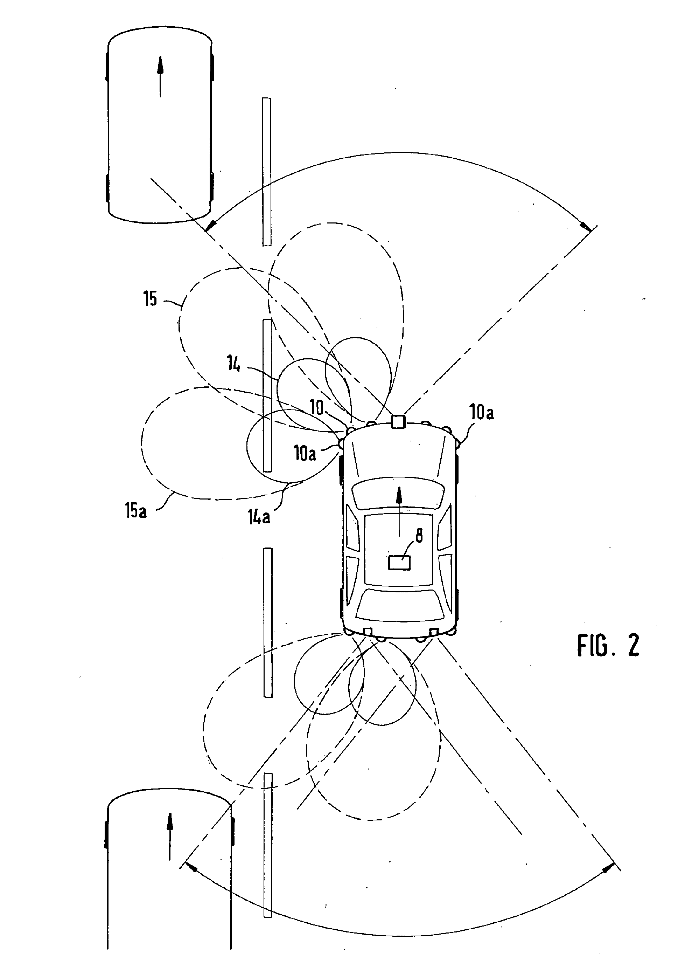

Fig. 2 zeigt das Kraftfahrzeug 1 sowie die Situation aus Fig. 1, wobei im gezeigten Beispiel das Parkhilfesystem 8 ein aktives Parkhilfesystem ist, das im Stande ist, ohne jedwede Fahreraktion das Fahrzeug in eine zuvor ausgemessene Parklücke selber einzuparken, wozu eine entsprechende Lenkaktorik und eine Aktortorik für das Antriebsaggregat und die Bremseinrichtung vorgesehen ist, worauf nicht näher eingegangen werden braucht. Ein solches aktives Einparkhilfesystem umfasst zusätzliche Ultraschallsensoren 10a, die an beiden Seiten des Fahrzeugs angeordnet sind und einen originären Erfassungsbereich 14a haben, der mit seiner Hauptschallrichtung im Wesentlichen vertikal zur Fahrzeuglängsachse (repräsentiert durch den Fahrtrichtungspfeil) steht. Auch hier besteht die Möglichkeit, den Erfassungsbereich 14a dann, wenn das Einparkhilfesystem 8 als Unterstützungssystem für einen oder beide aktiven Assistenzsysteme 2, 6 zugeschaltet wird, deutlich zu vergrößern, wie durch den gestrichelten erweiterten Erfassungsbereich 15a dargestellt ist. Dieser erstreckt sich nun bis weit in den ursprünglichen Totwinkelbereich hinein. Ersichtlich kann hierdurch die resultierende Lücke zwischen den Erfassungsbereichen 15 des hinteren Ultraschallsensors 10 und dem Erfassungsbereich 15a des zusätzlichen Ultraschallsensors 10a nahezu soweit verkleinert werden, dass ein überholendes Kraftfahrzeug im Erfassungsbereich 15 mit seinem Heck ist, während die Fahrzeugfront bereits vom Erfassungsbereich 15a erfasst wird. Hierüber ist es also möglich, ein überholendes Fahrzeug nahezu zu jedem Zeitpunkt zu erfassen und quasi von vorne nach hinten zu "übergeben".

Es ist aber nicht nur eine Unterstützung eines Spurwechselassistenzsystems 2 möglich, auch ein Spurhaltesystem kann hierüber vorteilhaft weitergebildet werden. Denn infolge der Erfassung von Objekten im ursprünglichen Totwinkelbereich 13 ist es möglich, etwaige Warnungen oder aktive Lenkeingriffe über das Spurhaltesystem 6 deutlich früher zu geben beziehungsweise vorzunehmen, beispielsweise dann, wenn ein überholendes Fahrzeug über den erweiterten Erfassungsbereich 15 des hinteren oder vorderen Ultraschallsensors 10 oder den erweiterten Erfassungsbereich 15a des Ultraschallsensors 10a erfasst wird und dieses Fahrzeug selbst relativ nahe dem eigenen Fahrzeug fährt, gegebenenfalls schon nahe der Mittelbegrenzung. In diesem Fall wäre es für das eigene Kraftfahrzeug nicht mehr möglich weiter nach links zu fahren, da ansonsten eine Kollisionsgefahr bestünde. Infolge der frühzeitigen Erfassung dieses überholenden Kraftfahrzeugs lange bevor es in den Erfassungsbereich 12 der Kamera 7 eintritt, kann der Fahrer wesentlich früher gewarnt werden beziehungsweise ein aktiver Fahreingriff über das Spurhaltesystem 6 erfolgen.

Neben einer automatischen Aktivierung des Einparkhilfesystems bei Erreichen der Grenzgeschwindigkeit oder mit Aktivierung eines oder beider Assistenzsysteme ist auch eine aktive Aktivierung durch den Fahrer, z.B. über ein geeignetes Bedienelement denkbar. Ferner sind im aktivierten Modus nicht unbedingt nur die linksseitigen Ultraschallsensoren im erweiterten Erfassungsmodus aktiv, sondern auch die rechtsseitigen, um z.B. bei einer Autobahnfahrt auch rechts befindliche Objekte erfassen zu können.

## Patentansprüche

1. Kraftfahrzeug (1) mit einem Spurwechsel- oder einem Spurhalteassistenzsystem (2, 6) umfassend den Bereich vor und/oder hinter dem Fahrzeug erfassende Überwachungsmittel (4), sowie einem Einparkhilfesystem (8) umfassend mehrere front- und/oder heckseitig vorgesehene Ultraschallsensoren (10, 10a) zur Umfelderfassung mit einem ersten Erfassungsbereich der Ultraschallsensoren (10, 10a) im Einparkhilfebetrieb, wobei das Einparkhilfesystem (8) während der Fahrt unter gleichzeitigem Umschalten auf einen Betrieb wenigstens eines Ultraschallsensors (10, 10a) mit einem vergrößerten Erfassungsbereich (15, 15a) aktivierbar ist und die von dessen wenigstens einem Ultraschallsensor (10, 10a) gelieferten Informationen seitens des Spurwechsel- oder Spurhalteassistenzsystems (2, 6) verarbeitbar sind,
**dadurch gekennzeichnet,**
**dass** das Einparkhilfesystem (8) mit einer Aktivierung des Spurwechsel- oder Spurhalteassistenzsystems (2, 6) automatisch auf den Betrieb wenigstens eines Ultraschallsensors (10, 10a) mit einem vergrößerten Erfassungsbereich (15, 15a) aktiviert ist.

2. Kraftfahrzeug nach einem der vorangehenden Ansprüche,
**dadurch gekennzeichnet,**
**dass** das Einparkhilfesystem (8) ein aktives System ist, das das Fahrzeug automatisch ohne Fahreraktivität zum Einparken bewegt, und das vorzugsweise beidseits am Fahrzeug angeordnete Ultraschallsensoren (10a) aufweist, deren Erfassungsbereich (14a, 15a) sich zur Seite des Fahrzeugs, vorzugsweise mit einer im wesentlichen senkrecht zur Fahrzeuglängsachse stehenden Hauptschallrichtung, erstreckt.

3. Kraftfahrzeug nach einem der vorangehenden Ansprüche,
**dadurch gekennzeichnet,**
**dass** das von einem Spurwechselassistenzsystem (2) ermittelte und die Position eines erfassten Fahrzeugs außerhalb des Erfassungsbereichs (11) der systemeigenen Überwachungsmittel (4) beschreibende Ermittlungsergebnis anhand der von dem oder den Ultraschallsensoren (10, 10a) gelieferten Informationen verifizierbar ist.

## Claims

1. Motor vehicle (1) comprising a monitoring means (4) which has a lane-change assistance system (2) or a lane-keeping assistance system (6) and detects the region in front of and/or behind the vehicle, and comprising a parking assistance system (8) having a plurality of ultrasonic sensors (10, 10a) provided at the front and/or rear for detecting surroundings using a first detection region of the ultrasonic sensors (10, 10a) during operation of the parking assistance system, it being possible to activate the parking assistance system (8) during the journey by simultaneously switching to operation of at least one ultrasonic sensor (10, 10a) having an enlarged detection region (15, 15a) and it being possible for the lane-change assistance system (2) or lane-keeping assistance system (6) to process the information supplied by the at least one ultrasonic sensor (10, 10a) of said region,
**characterised in that**
the parking assistance system (8) is activated by automatically activating the lane-change assistance system (2) or lane-keeping assistance system (6) to the operation of at least one ultrasonic sensor (10, 10a) having an enlarged detection region (15, 15a).

2. Motor vehicle according to any of the preceding claims,
**characterised in that**
the parking assistance system (8) is an active system which automatically moves the vehicle, without driver activity, in order to park, and which comprises ultrasonic sensors (10a) which are preferably arranged on either side of the vehicle and the detection region (14a, 15a) of which extends towards the vehicle side, preferably in a main sound direction which is substantially perpendicular to the vehicle longitudinal axis.

3. Motor vehicle according to any of the preceding claims,
**characterised in that**
the detection result, which is detected by a lane-change assistance system (2) and describes the position of a detected vehicle outside the detection region (11) of the native monitoring means (4), can be verified on the basis of the information supplied by the ultrasonic sensor(s) (10, 10a).

## Revendications

1. Véhicule automobile (1) avec un système d'assistance au changement de voie ou au maintien sur la voie (2, 6) comprenant des moyens de surveillance (4) détectant la zone qui se trouve devant et/ou derrière le véhicule, ainsi qu'un système d'assistance au stationnement (8) comprenant plusieurs capteurs à ultrasons (10, 10a) prévus à l'avant et/ou à l'arrière pour la détection périphérique avec une première plage de détection des capteurs à ultrasons (10, 10a) en mode d'assistance au stationnement, dans lequel le système d'assistance au stationnement (8) peut être activé au cours du trajet tout en passant simultanément au fonctionnement au moins d'un capteur à ultrasons (10, 10a) ayant une plage de détection plus importante (15, 15a) et les informations délivrées par son au moins un capteur à ultrasons (10, 10a) peuvent être traitées par le système d'assistance au changement de voie ou au maintien sur la voie (2, 6),
**caractérisé en ce que** :
le système d'assistance au stationnement (8) est activé par activation du système d'assistance au changement de voie ou au maintien sur la voie (2, 6) automatiquement par fonctionnement au moins d'un capteur à ultrasons (10, 10a) avec une plage de détection plus grande.

2. Véhicule automobile selon l'une quelconque des revendications précédentes,
**caractérisé en ce que** :
le système d'assistance au stationnement (8) est un système actif qui déplace automatiquement le véhicule sans activité du conducteur à des fins de stationnement et qui présente de préférence des capteurs à ultrasons (10a) aménagés des deux côtés sur le véhicule, capteurs dont la plage de détection (14a, 15a) s'étend sur le côté du véhicule, de préférence avec une direction sonore principale qui est sensiblement perpendiculaire à l'axe longitudinal du véhicule.

3. Véhicule automobile selon l'une quelconque des revendications précédentes,
**caractérisé en ce que** :
le résultat de la détection déterminé par un système d'assistance au changement de voie (2) et décrivant la position d'un véhicule détecté en dehors de la plage de détection (11) des moyens de surveillance (4) propres au système peut être vérifié sur la base des informations fournies par le ou les capteurs à ultrasons (10, 10a).
